# EUROPEAN PATENT APPLICATION

(11) **EP 4 447 196 A1**
(43) Date of publication of application: **16.10.2024**
(21) Application number: 22904588.5
(22) Date of filing: 05.12.2022
(51) Int. Cl.: H01M 10/54, C22B 26/12

(54) **METHOD FOR RECOVERING LITHIUM FROM WASTE LITHIUM BATTERY**

(30) Priority: 10.12.2021 KR 20210176599
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR)
(72) Inventor: JUNG, Eun Jin, Seoul 03720 (KR); HAN, Gilsoo, Yongin-si, Gyeonggi-do 16930 (KR); WOO, Kwang Sun, Pohang-si, Gyeongsangbuk-do 37685 (KR); KIM, Byung Won, Pohang-si, Gyeongsangbuk-do 37536 (KR)
(74) Representative: Meissner Bolte Partnerschaft mbB
(86) International application number: PCT/KR2022/019599
(87) International publication number: WO 2023/106758

(57) **Abstract**

Provided is a method for recovering lithium from a waste lithium battery cell including: heat treating a mixture including a waste lithium battery cell and an additive; and trapping a lithium salt produced in the heat treating.

## Description

### [Technical Field]

The present exemplary embodiments relate to a method for recovering lithium from a waste lithium battery. More particularly, the present exemplary embodiments relate to a method of mixing a waste lithium battery with an additive and recovering a lithium salt under low temperature melting conditions.

### [Background Art]

Since a lithium battery has excellent charge and discharge performance and high energy density, it is being widely used as a secondary battery, and in particular, is extensively used in small electronics such as mobile phones and laptops. Recently, as the spread of electric vehicles and the like becomes visible, a large capacity lithium battery is being actively developed.

Lithium contained in the lithium battery is a high-priced metal, and needs to be recovered from lithium batteries to be discarded and reused.

As a conventional method for extracting or recovering lithium from a lithium battery, a process of separating a positive electrode material from a waste lithium battery, extracting it with a strong acid, neutralizing it with an alkali, and precipitating cobalt, nickel, and the like with a hydroxide to recover lithium, and a wet process of dissolving a positive electrode material with sulfuric acid or nitric acid in the presence of hydrogen peroxide and then separating and recovering the metal by a neutralization precipitation method have been commonly used. However, since the wet processes using hydrochloric acid, sulfuric acid, and nitric acid should use a strong acid in an extraction process, problems such as serious environmental pollution by evaporation into the atmosphere, and in particular, equipment corrosion by acid arise.

In addition, as an alternative method for solving the problem in the wet process as described above, a dry process of mixing an additive with the waste lithium battery and melting it to recover lithium has been suggested. However, in the dry process by melting as described above, the additive such as CaCl₂, MgCl₂, and MnCl₂ may produce CaO, MgO, and the like with the production of lithium chloride to deteriorate viscosity and flowability of slag in a high temperature phase. In order to solve the problem of deteriorating flowability of a slag phase at a high temperature as such, addition of further flux is inevitable.

Therefore, development of a technology which is easy to operate while solving environmental pollution and equipment corrosion problems is needed.

### [Disclosure]

### [Technical Problem]

The present disclosure attempts to provide a low-temperature dry lithium recovery method capable of efficiently recovering lithium from a waste lithium battery.

### [Technical Solution]

An exemplary embodiment of the present disclosure provides a method for recovering lithium from a waste lithium battery including: melting a mixture including a waste lithium battery cell and an additive at a low temperature; and trapping a lithium salt produced in the low-temperature melting.

Melting a mixture including a waste lithium battery cell and an additive at a low temperature; and trapping a lithium salt produced in the low-temperature melting may be included.

In addition, the melting of a mixture including a waste lithium battery cell and an additive at a low temperature may be performed at a temperature in a range of 100°C to 1500°C, specifically 100°C to 1100°C for 10 minutes to 5 hours.

In addition, the additive may be FeCl₃, and the additive FeCl₃ may be added in a Cl equivalent range of 0.5 equivalents to 3 equivalents based on lithium included in the waste lithium battery cell.

Before the melting of a mixture including a waste lithium battery cell and an additive at a low temperature, pretreating a negative electrode material of a waste lithium battery cell may be performed.

The trapped lithium salt may be a liquid phase, a solid phase, or a mixture of a liquid phase and a solid phase, and the trapped lithium salt may be washed with water to obtain a high-purity lithium salt.

In addition, the trapped lithium salt is a gas phase, and the gas phase lithium salt may be solidified in a cooling zone and washed with water to obtain a high-purity lithium salt.

### [Advantageous Effects]

According to the present exemplary embodiment, lithium in a waste lithium battery may be efficiently recovered by mixing the waste lithium battery with an additive and melting the mixture at a low temperature.

By melting under low temperature conditions using an additive, problems such as corrosion on equipment may be prevented, it is easy to control entire operation, and operation costs may be reduced by operation at a low temperature.

### [Description of the Drawings]

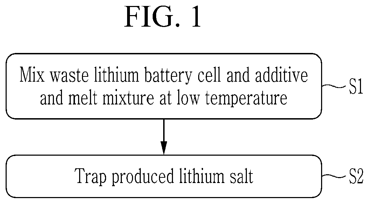

FIG. 1 schematically illustrates a method for recovering lithium from a waste lithium battery according to an exemplary embodiment.

### [Mode for Invention]

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, regions, integers, steps, operations, elements, and/or components, but is not excluding the presence or addition of other characteristics, regions, integers, steps, operations, elements, and/or components.

When it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

Hereinafter, exemplary embodiments of the present disclosure will be described in detail. However, they are only suggested as an example, and the present disclosure is not limited thereto and is defined only by the scope of the claims described later.

FIG. 1 schematically illustrates a method for recovering lithium from a waste lithium battery according to an exemplary embodiment.

Referring to FIG. 1, the method for recovering lithium from a waste lithium battery according to an exemplary embodiment of the present disclosure may include: mixing a waste lithium battery cell and an additive and melting the mixture at a low temperature (S1); and trapping a lithium salt obtained in the low-temperature melting (S2).

First, the step of mixing a waste lithium battery cell and an additive and melting the mixture at a low temperature (S1) may be performed.

The waste lithium battery cell may be added to a reaction furnace in a crushed state or uncrushed state.

The waste lithium battery cell may include a negative electrode material, a positive electrode material, and a cell structure. The negative electrode material may include copper, carbon, and the like, the positive electrode material may include lithium, cobalt, nickel, manganese, aluminum, and iron, and the cell structure may include copper and aluminum.

In order to selectively recover lithium in the waste lithium battery, it is favorable to form a compound such as LiCl, LiF, Li₃PO₄, Li₂S, Li₂SO₄, and LiNO₃, which may maximize vapor pressure of Li as compared with a Li oxide for minimizing production of a compound such as LiAlO₂ which is a compound of Al and Li included in the waste lithium battery.

In the present exemplary embodiment, the additive may be one or more selected from Cl compounds, F compounds, P compounds, S compounds, and N compounds, specifically, may be one or more selected from MgCl₂, FeCl₂, and FeCl₃, and more specifically, may be FeCl₃. FeCl₃ may react with Li in the waste lithium battery at a low temperature to produce LiCl, and a problem of requiring a high reaction temperature when an additive such as CaCl₂ and MgCl₂ reacts with a chloride may be solved.

Meanwhile, the amount of additive used may be added in a Cl equivalent range of 0.5 equivalents to 3 equivalents, specifically 1 equivalent to 2 equivalents based on lithium included in the waste lithium battery cell.

When the amount of the additive added is smaller than the range, a lithium recovery rate may be lowered. Meanwhile, when the amount of the additive added is above the range, other metal chlorides may be produced.

In the reaction furnace, the additive FeCl₃ may be used as a trapping metal with a NiMnCo alloy in the waste lithium battery, and a part thereof may be converted into FeO. Herein, it may be difficult to trap metal due to an excessive amount of carbon (C) in the waste lithium battery. Fe remaining after the reaction of the additive FeCl₃ added may react with C together with some NiCoMn to be alloyed in a Fe₃C form. As an example, Cl of injected FeCl₃ reacts with Li depending on a carbon content to form LiCl, and residual Fe becomes Fe₃C or FeO and may be suspended as a produced slag.

In addition, an oxide such as K₂O, BaO, and Na₂O may be further added. By adding the oxide, it is favorable to reduce production of a compound such as LiAlO₂ which is a compound of Al and Li included in the waste lithium battery.

The waste lithium battery and the additive are mixed and melted at a low temperature.

A low melting temperature may be in a range of 100°C to 1500°C, specifically 100°C to 1100°C, and more specifically 100°C to 1000°C. In addition, a time of low-temperature malting may be in a range of 10 minutes to 5 hours.

When the low melting temperature is lower than the temperature range, a reaction production driving force is low and efficiency of converting lithium in the waste lithium battery into a lithium salt is reduced. In addition, when it is higher than the temperature range, the atmosphere in the reaction furnace may be unstable to deteriorate quality of produced lithium and operation costs due to a temperature rise may be increased.

Meanwhile, before adding the waste lithium battery cell to the reaction furnace, a process of pretreating a negative electrode material for removing carbon included in the negative electrode material may be performed. Carbon may be selectively oxidized by the process of pretreating a negative electrode material or the negative electrode material may be used as it is without previous removal of carbon. However, the present disclosure is not limited thereto.

When carbon in the negative electrode material is treated by the pretreatment of the negative electrode material, melting and trapping of a reduced alloy may be stabilized. This is favorable in terms of improving lithium recovery efficiency.

Next, a step of trapping a lithium salt produced in the low-temperature melting step in a trapping unit (S2) may be performed.

Lithium in the waste lithium battery cell may be converted into a lithium salt in a low-temperature melting step, and may be in one or more states of a gas phase, a liquid phase, and a solid phase depending on a process temperature and a cooling environment.

In addition, the produced lithium salt may be trapped in a separately provided trapping unit. When a temperature in the reaction furnace is 1000°C or higher, the produced lithium salt is evaporated to become a gas phase. When a gas phase lithium chloride is produced, lithium is solidified in a cooling zone in the rear portion, washed with water, and recovered as a lithium chloride aqueous solution.

When the temperature of the reaction furnace is in a range of 600°C to 1000°C, the produced lithium salt may be melted to become a liquid phase, and when the temperature of the reaction furnace is in a range of lower than 600°C, the produced lithium salt may be a solid phase.

When the temperature of the reaction furnace is in a range of 100°C to 1000°C, it may be a liquid phase, a solid phase, or a mixture of a liquid phase and a solid phase.

When the lithium salt is a liquid phase, a solid phase, of a mixture of a solid phase and a liquid phase, the lithium salt may be separated using a separate trapping device disposed in the lower portion of the reaction furnace. Herein, the separated lithium salt may be converted into a lithium salt aqueous solution by washing with water, and then a high-purity lithium salt may be obtained.

A lithium recovery rate may be calculated by analyzing a lithium concentration in the obtained lithium salt aqueous solution.

Meanwhile, when the lithium salt is a liquid phase or a solid phase, a high-temperature reaction furnace is provided in the rear portion to evaporate lithium chloride at a high temperature, thereby obtaining high-purity lithium chloride. Herein, the temperature of the high-temperature reaction furnace may be 1400°C or higher.

### [Mode for Invention]

Hereinafter, the examples and the comparative examples of the present disclosure will be described in detail. However, these are suggested only as an example, and the present disclosure is not limited thereto and is defined only by the scope of the claims described later.

### Example 1

A waste lithium battery cell and FeCl₃ were mixed and heated at a temperature of 1100°C or lower to recover a lithium salt. The lithium salt remained as a product in the raw material without vaporizing.

### Comparative Examples 1 and 2

Lithium salts were recovered in the same manner as in Example 1, except that CaCl₂ was used instead of FeCl₃ as the additive in Comparative Example 1 and MgCl₂ was used in Comparative Example 2.

The recovery rates of lithium recovered according to Example 1, Comparative Example 1, and Comparative Example 2 are shown in the following Table 1. The recovery rate of lithium was calculated by a lithium salt recovered by water leaching to the total amount of lithium in the waste lithium battery cell.

**(Table 1)**

| Classification | Li recovery rate |
|---|---|
| Example 1 | 83.83% |
| Comparative Example 1 | 68.99% |
| Comparative Example 2 | 69.09% |

Referring to Table 1, the recovery rate of lithium recovered according to Example 1 was 83.83%, which was shown to be better than 68.99% of Comparative Example 1 and 69.09% of Comparative Example 2.

The present disclosure is not limited by the exemplary embodiments and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments described above are illustrates and are not restrictive in all aspects.

## Claims

1. A method for recovering lithium from a waste lithium battery cell, the method comprising:
heat treating a mixture including a waste lithium battery cell and an additive; and
trapping a lithium salt produced in the heat treating.

2. The method for recovering lithium from a waste lithium battery cell of claim 1, wherein:
the heat treating of a mixture including a waste lithium battery cell and an additive is
performed at a temperature in a range of 100°C to 1500°C.

3. The method for recovering lithium from a waste lithium battery cell of claim 2, wherein:
the heat treating of a mixture including a waste lithium battery cell and an additive is
performed at a temperature in a range of 100°C to 1100°C.

4. The method for recovering lithium from a waste lithium battery cell of claim 1, wherein:
the heat treating of a mixture including a waste lithium battery cell and an additive is
performed for 10 minutes to 5 hours.

5. The method for recovering lithium from a waste lithium battery cell of claim 1, wherein:
the additive is one or more selected from Cl compounds, F compounds, P compounds, S compounds, and N compounds.

6. The method for recovering lithium from a waste lithium battery cell of claim 5, wherein:
the Cl compound is
one or more selected from MgCl₂, FeCl₂, and FeCl₃.

7. The method for recovering lithium from a waste lithium battery cell of claim 5, wherein:
the additive is added
in a Cl equivalent range of 0.5 equivalents to 3 equivalents based on lithium included the waste lithium battery cell.

8. The method for recovering lithium from a waste lithium battery cell of claim 1, wherein:
before the heat treating of a mixture including a waste lithium battery cell and an additive,
pretreating a negative electrode material of the waste lithium battery cell is performed.

9. The method for recovering lithium from a waste lithium battery cell of claim 1, wherein:
the trapped lithium salt is a liquid phase, a solid phase, or a mixture of a solid phase and a liquid phase, and
the trapped lithium salt is washed with water to obtain a high-purity lithium salt.

10. The method for recovering lithium from a waste lithium battery cell of claim 1, wherein:
the trapped lithium salt is a gas phase, and
the gas phase lithium salt is solidified in a cooling zone and then washed with water to obtain the high-purity lithium salt.
